(19) Europäisches Patentamt
European Patent Office
Office européen des brevets

(11) **EP 1 597 094 B1**

(12) **FASCICULE DE BREVET EUROPEEN**

(45) Date de publication et mention
de la délivrance du brevet:
**06.05.2009 Bulletin 2009/19**

(51) Int Cl.:
***B60C 9/18*** *(2006.01)*

(21) Numéro de dépôt: **04710851.9**

(22) Date de dépôt: **13.02.2004**

(86) Numéro de dépôt international:
**PCT/EP2004/001362**

(87) Numéro de publication internationale:
**WO 2004/076204 (10.09.2004 Gazette 2004/37)**

(54) **ARMATURE DE SOMMET POUR PNEUMATIQUE RADIAL**

GÜRTELVERSTÄRKUNG FÜR EINEN RADIALREIFEN

CROWN REINFORCEMENT FOR RADIAL TYRE

(84) Etats contractants désignés:
**AT BE BG CH CY CZ DE DK EE ES FI FR GB GR HU IE IT LI LU MC NL PT RO SE SI SK TR**

(30) Priorité: **17.02.2003 FR 0301904**

(43) Date de publication de la demande:
**23.11.2005 Bulletin 2005/47**

(73) Titulaires:
• **Société de Technologie Michelin**
**63000 Clermont-Ferrand Cedex 09 (FR)**
• **Michelin Recherche et Technique S.A.**
**1763 Granges-Paccot (CH)**

(72) Inventeurs:
• **GERVAIS, Philippe**
**F-63200 Riom (FR)**

• **BONDU, Lucien**
**F-63800 La Roche Noire (FR)**

(74) Mandataire: **Le Cam, Stéphane Georges Elie**
**M.F.P. Michelin,**
**SGD/LG/PI - F 35 - Ladoux**
**63040 Clermont-Ferrand Cedex 09 (FR)**

(56) Documents cités:
**EP-A- 0 732 226        EP-A- 1 170 151**
**WO-A-99/39927**

• **PATENT ABSTRACTS OF JAPAN vol. 2000, no. 09, 13 octobre 2000 (2000-10-13) -& JP 2000 177316 A (YOKOHAMA RUBBER CO LTD:THE), 27 juin 2000 (2000-06-27)**

EP 1 597 094 B1

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale, l'armature de carcasse est ancrée de part et d'autre dans la zone du bourrelet et est surmontée radialement par une armature de sommet constituée d'au moins deux nappes, superposées et formées de fils ou câbles parallèles dans chaque nappe. Elle comprend aussi généralement une nappe de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une nappe de travail ; lorsque ladite armature de sommet comporte au moins deux nappes de travail, celles-ci sont formées d'éléments de renforcement métalliques inextensibles, parallèles entre eux dans chaque nappe et croisés d'une nappe à la suivante en faisant avec la direction circonférentielle des angles compris entre 10° et 45°. Lesdites nappes de travail, formant l'armature de travail, peuvent encore être recouvertes d'au moins une nappe dite de protection et formée d'éléments de renforcement avantageusement métalliques et extensibles, dits élastiques.

Dans le cas de pneumatique pour véhicules "Poids-Lourds", une seule nappe de protection est habituellement présente et ses éléments de protection sont, dans la plupart des cas, orientés dans la même direction et avec le même angle en valeur absolue que ceux des éléments de renforcement de la nappe de travail radialement la plus à l'extérieur et donc radialement adjacente. Dans le cas de pneumatiques de Génie Civil destinés aux roulages sur sols plus ou moins accidentés, la présence de deux nappes de protection est avantageuse, les éléments de renforcement étant croisés d'une nappe à la suivante et les éléments de renforcement de la nappe de protection radialement intérieure étant croisés avec les éléments de renforcement inextensibles de la nappe de travail radialement extérieure et adjacente à ladite nappe de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est fortement pénalisée.

Les contraintes existantes au niveau de l'armature de sommet et plus particulièrement les contraintes de cisaillement entre les nappes de sommet, alliées à une élévation non négligeable de la température de fonctionnement au niveau des extrémités de la nappe de axialement la plus courte, ont pour conséquence l'apparition et la propagation de fissures de la gomme au niveau desdites extrémités, et ceci malgré la présence à la jonction des bords de nappes de sommet de travail d'une couche de caoutchouc épaissie. Le même problème existe dans le cas de bords de deux nappes à éléments de renforcement, ladite autre nappe n'étant pas obligatoirement radialement adjacente à la première.

Les progrès réalisés en durée de vie (nombre de kilomètres parcourus) sur usure des pneumatiques "Poids-Lourds", ainsi que la possibilité d'un rechapage ultérieur, aisé et économique, demande une armature de sommet dont la résistance à la séparation entre les bords de nappes de travail soit améliorée.

Afin de remédier aux inconvénients ci-dessus et d'améliorer l'endurance de l'armature de sommet du type de pneumatique étudié, un certain nombre de brevets antérieurs revendique des solutions relatives à la structure et qualité des couches et/ou profilés de mélanges caoutchouteux qui sont disposés entre et/ou autour des extrémités de nappes et plus particulièrement des extrémités de la nappe axialement la plus courte.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Le brevet US 5 154 217 utilise une unité de mesure différente et revendique de disposer entre les extrémités de deux nappes, dans le prolongement de la nappe comprise entre lesdites deux nappes, un coussin de mélange caoutchouteux dont le module d'élasticité à 100 % d'allongement est supérieur au module du même nom de la bande de roulement.

Pour assurer la jonction des deux bords respectifs de deux nappes d'armature de sommet, le brevet FR 2 298 448 décrit l'utilisation de gommes dites de cisaillement, entre les dits bords, de dureté Shore A et de module d'élasticité à 100 % élevés, utilisation combinée à l'emploi de bandes de caoutchouc anisotrope disposées entre les bords de l'armature de sommet et l'armature de carcasse.

Il en est de même dans le cas de la jonction des nappes d'armature de sommet décrites dans le brevet FR 2 499 912, la partie latérale de la couche de caoutchouc disposée entre les deux nappes principales de l'armature de sommet étant constituée d'un mélange caoutchouteux de dureté Shore élevée.

D'autres solutions ont été envisagées pour améliorer la résistance à la séparation des nappes d'armature de sommet, solutions consistant à enrober au moins l'extrémité de la nappe axialement la moins large dans au moins une couche de mélange caoutchouteux renforcée ou non par des éléments de renforcement. Dans le cas d'une seule couche, cette dernière est avantageusement retournée sur l'extrémité de la nappe, comme, par exemple, décrit et montré sur le document FR 1 226 595, où la couche est renforcée par des fils métalliques très fins, ou sur le document JP. 266 703, la couche de protection étant uniquement constituée de caoutchouc à fort module d'élasticité, ou encore sur le brevet FR 2 671 516.

Il a été constaté que les différentes structures énumérées ci-dessus ne procuraient pas une solution totalement satisfaisante dans des conditions de roulage fortement pénalisantes pour le pneumatique.

Un pneumatique ayant les caractéristiques définies dans le préambule de la revendication 1 est connu du brevet EP 1 062 106.

Dans le brevet EP 1 062 106, la demanderesse a proposé un pneumatique dont l'armature de sommet comprend au moins deux nappes d'éléments de renforcement, dans lequel le bord de la nappe axialement la moins large est séparé de la nappe axialement la plus large par un profilé de mélange caoutchouteux, dont l'extrémité axialement extérieure est située à une distance du plan équatorial du pneumatique au moins égale à la distance séparant dudit plan l'extrémité de la nappe la plus large et ledit profilé étant lui-même séparé du calandrage de la nappe la moins large par une gomme de bordure, ledit profilé, ladite gomme de bordure et ledit calandrage ayant respectivement des modules sécants d'élasticité sous tension à 10 % d'allongement relatif tels qu'ils décroissent radialement vers l'intérieur depuis le calandrage jusqu'au profilé.

Les essais réalisés avec ce type de pneumatique montrent qu'au vu des exigences actuelles en ce qui concerne les applications considérées, il est encore nécessaire d'améliorer les performances des pneumatiques notamment en terme d'endurance.

Les inventeurs se sont ainsi donnés pour mission la réalisation de pneumatiques destinés à équiper des véhicules portant de lourdes charges et roulant à vitesse soutenue présentant une endurance améliorée par rapport aux pneumatiques connus et notamment de limiter l'apparition et la propagation de fissures au niveau de l'extrémité de la nappe de travail la plus étroite axialement.

Ce but a été atteint selon l'invention par un pneumatique à armature de carcasse radiale, surmontée d'une armature de sommet comprenant au moins deux nappes d'éléments de renforcement, parallèles entre eux dans chaque nappe, lesdites deux nappes ayant des largeurs axiales inégales, au moins un premier profilé P de mélange caoutchouteux séparant la nappe d'éléments de renforcement axialement la plus large d'au moins une extrémité d'une deuxième nappe axialement plus étroite que la nappe axialement la plus large, l'extrémité axialement extérieure dudit premier profilé P étant située à une distance du plan équatorial du pneumatique inférieure à la distance séparant dudit plan l'extrémité de la nappe d'éléments de renforcement axialement la plus large, ledit profilé P étant radialement séparé au moins en partie du calandrage C de ladite nappe d'éléments de renforcement axialement plus étroite par un second profilé de mélange caoutchouteux G, et lesdits premier et second profilés de mélange caoutchouteux P et G et ledit calandrage C ayant respectivement des modules sécants d'élasticité sous tension à 10 % d'allongement MP, MG, MC de sorte que MC $\geq$ MG > MP.

La combinaison des couches de mélanges caoutchouteux P et G, de par le choix de leurs modules d'élasticité respectifs MP et MG autorisent une amélioration de la résistance de l'architecture sommet à la séparation entre les extrémités des nappes de travail. La présence de ces couches de mélange caoutchouteux semble en effet permettre, du fait du découplage des nappes ainsi obtenu, de protéger l'extrémité de la nappe la plus étroite et ainsi prévenir ou tout au moins retarder l'apparition d'une délamination de la dite extrémité de la nappe la plus étroite axialement.

De préférence, la somme des épaisseurs respectives des profilés de mélange caoutchouteux P et G, mesurée à l'extrémité de la nappe la moins large des deux nappes considérées, sera préférentiellement comprise entre 30 % et 80 % de l'épaisseur globale de mélange caoutchouteux entre génératrices de câbles respectivement des deux nappes : une épaisseur inférieure à 30 % ne permettant pas d'obtenir des résultats probants, et une épaisseur supérieure à 80 % étant inutile vis à vis de l'amélioration à la résistance à la séparation entre nappes et désavantageux du point de vue coût.

De préférence encore, les profilés de mélange caoutchouteux P et G, à l'extrémité axialement extérieure de la nappe axialement la plus étroite, présentent des épaisseurs telles que la distance radiale d entre les deux nappes, séparées par lesdits profilés de mélange caoutchouteux P et G, vérifie la relation :

$$3/5.\phi < d < 5.\phi$$

avec $\phi$, diamètre des éléments de renforcement de la nappe axialement la plus étroite.

La distance d est mesurée de câble à câble, c'est-à-dire entre le câble d'une première nappe et le câble d'une seconde nappe. En d'autres termes, cette distance d englobe l'épaisseur des profilés de mélange caoutchouteux P et G et les épaisseurs respectives des mélanges caoutchouteux de calandrage, radialement extérieure aux câbles de la nappe radialement intérieure et radialement intérieure aux câbles de la nappe radialement extérieure.

Selon un mode de réalisation avantageux de l'invention, la nappe axialement la plus étroite est radialement extérieure à la nappe axialement la plus large. Selon ce mode de réalisation le premier profilé de mélange caoutchouteux G est au moins en partie radialement extérieur au second profilé de mélange caoutchouteux P.

Une réalisation avantageuse de l'invention prévoit que l'extrémité axialement extérieure du second profilé de mélange caoutchouteux G est située à une distance dudit plan au moins égale à la demi-largeur de ladite nappe d'éléments de renforcement axialement plus étroite. Selon cette réalisation de l'invention, l'extrémité de ladite nappe axialement la plus étroite est radialement séparée de la nappe la plus large par la superposition radiale des deux profilés de mélange caoutchouteux P et G.

Selon une réalisation préférée de l'invention, le second profilé de mélange caoutchouteux G a son extrémité axialement intérieure située à une distance du plan équatorial au plus égale à la distance séparant dudit plan l'extrémité axialement intérieure dudit premier profilé de mélange caoutchouteux P. Selon cette réalisation et notamment lorsque l'extrémité axialement extérieure du second profilé de mélange caoutchouteux G est située à une distance dudit plan au moins égale à la demi-largeur de ladite nappe d'éléments de renforcement axialement plus étroite, le premier profilé de mélange caoutchouteux P n'est pas au contact de ladite nappe axialement la plus étroite.

De préférence encore selon l'invention, la largeur axiale D du profilé de mélange caoutchouteux G comprise entre l'extrémité axialement intérieure dudit profilé G et l'extrémité de la nappe d'éléments de renforcement axialement la plus étroite est telle que :

$$3.\phi \le D,$$

avec $\phi$, diamètre des éléments de renforcement de la nappe axialement la plus étroite.

Une telle relation définit une zone d'engagement entre le profilé de mélange caoutchouteux G et la nappe axialement la plus étroite. Un tel engagement en dessous d'une valeur égale à trois fois le diamètre des éléments de renforcement de la nappe axialement la plus étroite peut ne pas être suffisant pour obtenir un découplage des nappes pour notamment obtenir une atténuation des sollicitations en extrémité de la nappe axialement la plus étroite.

Lorsque les nappes considérées sont des nappes de travail constituées d'éléments de renforcements parallèles entre eux et croisés d'une nappe à la suivante, la largeur axiale D du profilé de mélange caoutchouteux G comprise entre l'extrémité axialement intérieure dudit profilé G et l'extrémité de la nappe d'éléments de renforcement axialement la plus étroite est telle que :

$$D \le 20.\phi$$

Une valeur de cet engagement supérieure à vingt fois le diamètre des éléments de renforcement de la nappe de travail axialement la plus étroite peut conduire à une diminution trop importante de la rigidité de dérive.

Lorsque l'armature de sommet du pneumatique selon l'invention est composée d'au moins une armature de travail comprenant au moins deux nappes d'éléments de renforcement, parallèles entre eux dans chaque nappe et de préférence croisés d'une nappe à la suivante, lesdites deux nappes ayant des largeurs axiales inégales, et comporte en outre une nappe de sommet de protection, radialement extérieure à l'armature de sommet de travail, de largeur axiale comprise entre celles des nappes de travail et supérieure à la largeur de la nappe de travail radialement adjacente à ladite nappe de sommet de protection, l'extrémité axialement extérieure du premier profilé de mélange caoutchouteux P est avantageusement située à une distance du plan équatorial du pneumatique au moins égale à la demi-largeur de la nappe sommet de protection. Une telle réalisation autorise un découplage de l'extrémité de la nappe sommet de protection et de la nappe axialement la plus large de l'armature de travail. La position de l'extrémité axialement extérieure du second profilé de mélange caoutchouteux G est avantageusement située à une distance dudit plan au moins égale à la demi-largeur de la nappe sommet de protection. Selon une telle réalisation de l'invention, lorsque l'armature de sommet comporte une nappe de protection dont l'extrémité est comprise axialement entre les extrémités de deux nappes de travail, ladite extrémité de la nappe de sommet de protection est radialement séparée de la nappe de travail la plus large par la superposition radiale des deux profilés de mélange caoutchouteux P et G.

De préférence, lorsque l'armature de sommet du pneumatique selon l'invention comporte une nappe de protection dont l'extrémité est comprise axialement entre les extrémités de deux nappes de travail, l'extrémité axialement intérieure du premier profilé de mélange caoutchouteux P est située à une distance du plan équatorial au moins égale à la demi-largeur de la nappe de travail axialement la moins large. Une telle réalisation permet de pouvoir conserver un découplage de l'extrémité de la nappe de travail axialement la plus étroite et de la nappe de travail axialement la plus large par la seule présence du second profilé de mélange caoutchouteux G. La présence de la nappe sommet de protection peut en effet nécessiter de ne pas interposer radialement les deux profilés de mélange caoutchouteux P et G entre les deux nappes de travail pour éviter une épaisseur globale du pneumatique inacceptable dans cette zone.

Selon une variante de réalisation de l'invention, l'armature de sommet du pneumatique étant composée d'au moins une armature de travail comprenant au moins une nappe d'éléments de renforcement de travail, un troisième profilé de mélange caoutchouteux B borde l'extrémité de la nappe d'éléments de renforcement de travail radialement la plus à l'intérieur, ledit troisième profilé de mélange caoutchouteux B étant au moins en partie radialement intérieur à ladite nappe radialement la plus à l'intérieur.

Le terme « border » doit être compris selon l'invention comme signifiant que le troisième profilé de mélange caoutchouteux B est adjacent à ladite nappe et que l'extrémité axialement extérieure dudit troisième profilé de mélange caoutchouteux B est située à une distance dudit plan au moins égale à la demi-largeur de ladite nappe d'éléments de renforcement de travail radialement la plus à l'intérieur.

Les essais réalisés selon cette variante de réalisation de l'invention ont montré que la présence d'une telle couche de mélange caoutchouteux B radialement intérieure et adjacente à la nappe radialement la plus à l'intérieur, et plus particulièrement lorsque ladite nappe est axialement la plus large, améliore encore la résistance de l'architecture sommet à la séparation entre les extrémités des nappes d'éléments de renforcement. Il semble que la présence de cette couche de mélange caoutchouteux B limite la propagation de fissures pouvant apparaître dans la masse caoutchouteuse au voisinage des extrémités des nappes de sommet.

Selon cette dernière variante de réalisation de l'invention, lorsque l'armature de sommet comprend en outre une nappe de triangulation radialement intérieure à ladite nappe de travail radialement la plus intérieure, et de préférence de largeur axiale inférieure à celle de ladite nappe de travail radialement la plus intérieure, le troisième profilé de mélange caoutchouteux B peut être radialement intercalé en partie entre ladite nappe de travail radialement la plus à l'intérieur et la nappe de triangulation, ou bien peut être radialement en partie à l'intérieur de la nappe de triangulation, ou bien encore le troisième profilé de mélange caoutchouteux B peut ne pas être au contact de ladite nappe de triangulation.

Avantageusement encore selon cette variante de réalisation de l'invention, le troisième profilé de mélange caoutchouteux B enveloppe l'extrémité de ladite nappe de travail radialement la plus à l'intérieur et présente une partie radialement extérieure à ladite nappe de travail radialement la plus à l'intérieur. Une telle réalisation de l'invention peut encore prévoir un recouvrement radial du troisième profilé de mélange caoutchouteux B avec le premier profilé de mélange caoutchouteux P et/ou avec le second profilé de mélange caoutchouteux G.

Selon une autre variante de réalisation de l'invention, l'armature de sommet étant composée d'au moins une armature de travail comprenant au moins une nappe d'éléments de renforcement, le second profilé de mélange caoutchouteux G enveloppe l'extrémité de ladite nappe de travail radialement la plus à l'intérieure et ledit deuxième profilé de mélange caoutchouteux G présente une partie radialement intérieure à la nappe de travail radialement la plus à l'intérieur. Cette autre variante de réalisation de l'invention prévoit que le second profilé de mélange caoutchouteux G combine à la fois sa fonction de découplage de deux nappes d'éléments de renforcement et la fonction précédemment remplie par le troisième profilé de mélange caoutchouteux B.

L'invention prévoit encore, selon cette variante de réalisation selon laquelle le deuxième profilé de mélange caoutchouteux G présente une partie radialement intérieure à la nappe de travail radialement la plus à l'intérieure, la présence d'un troisième profilé de mélange caoutchouteux B au moins en partie radialement intérieur à ladite nappe radialement la plus à l'intérieur, lesdits profilés de mélange caoutchouteux G et B pouvant se superposer radialement à l'extérieur et/ou radialement à l'intérieur de la nappe de travail radialement la plus à l'intérieure.

Avantageusement encore, l'armature de sommet comprenant en outre une nappe de triangulation radialement intérieure à la nappe de travail radialement la plus intérieure, et avantageusement de largeur axiale inférieure à celle de ladite la nappe de travail radialement la plus intérieure, le deuxième profilé de mélange caoutchouteux G peut être radialement intercalé en partie entre la nappe de travail radialement la plus à l'intérieure et la nappe de triangulation, ou bien peut être radialement en partie à l'intérieur de la nappe de triangulation, ou bien encore le deuxième profilé de mélange caoutchouteux G peut ne pas être au contact de ladite nappe de triangulation.

D'autres détails et caractéristiques avantageux de l'invention ressortiront ci-après de la description d'exemples de réalisations de l'invention en références aux figures 1 à 3 qui représentent :

> Figure 1, une vue partielle en section méridienne d'un schéma d'un pneumatique selon une réalisation de l'invention,

> Figure 2, une vue partielle en section méridienne d'un schéma d'un pneumatique selon une deuxième réalisation de l'invention,

> Figure 3, une vue partielle en section méridienne d'un schéma d'un pneumatique selon une troisième réalisation de l'invention,

Les figures ne sont pas représentées à l'échelle pour en faciliter la compréhension.

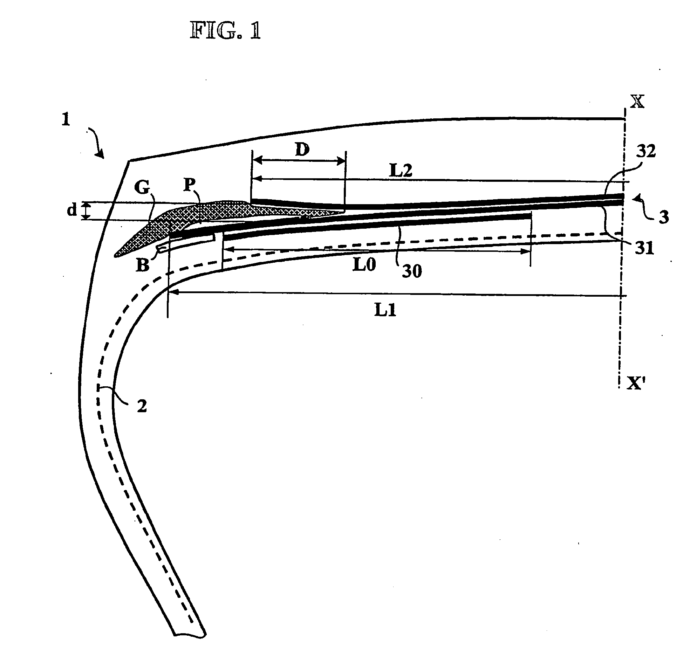

Sur la figure 1, est représentée une vue schématique partielle en section méridienne d'un pneumatique 1 de dimension 315/80.R22,5 X. Le pneumatique 1 a un rapport de forme H/S sensiblement égal à 0,65, H étant la hauteur du pneumatique sur jante et S la largeur axiale maximale dudit pneumatique monté sur sa jante de service 9.00 x 22.5 et gonflé à une pression recommandée de 9 bars.

Les figures 1 à 3 ne représentent qu'une demi-vue des pneumatiques qui se prolongent de manière symétrique par rapport à l'axe XX' qui représente le plan médian circonférentiel, ou plan équatorial, d'un pneumatique.

Le pneumatique 1 comprend une armature de carcasse radiale composée d'une seule nappe 2 de câbles métalliques inextensibles, c'est-à-dire des câbles présentant sous une force de traction égale à 10% de la force de rupture un allongement au plus égal à 0,2%. Ladite armature de carcasse est ancrée dans chaque bourrelet ; lesdits bourrelets ne sont pas représentés sur les figures 1 à 3. Elle est radialement à l'extérieur surmontée d'une armature de sommet 3 comprenant radialement de l'intérieur à l'extérieur :

- une première demi-nappe de sommet 30 dite de triangulation et formée de câbles métalliques inextensibles en acier, orientés d'un angle $\alpha_0$, égal dans le cas décrit à 65°,

- radialement au niveau de la nappe de triangulation 30, une couche B de mélanges caoutchouteux,

- radialement à l'extérieur de ladite nappe 30 et de la couche B de mélanges caoutchouteux, une première nappe de sommet de travail 31, formée de câbles métalliques inextensibles en acier faisant avec la direction circonférentielle un angle $\alpha_1$ égal à 18°, les câbles de la nappe de triangulation 30 et de la première nappe de travail ayant la même direction,

- radialement à l'extérieur et au contact de la nappe de sommet de travail 31, une couche P de mélanges caoutchouteux,

- radialement à l'extérieur et au contact de la couche P de mélanges caoutchouteux, une couche G de mélange caoutchouteux,

- puis, radialement à l'extérieur de la couche de mélange caoutchouteux G, une deuxième nappe de sommet de travail 32 formée de câbles métalliques identiques à ceux de la première nappe 31, et faisant avec la direction circonférentielle un angle $\alpha_2$, opposé à l'angle $\alpha_1$ et, dans le cas montré, égal en valeur absolue audit angle $\alpha_1$ de 18°, (mais pouvant être différent dudit angle $\alpha_1$).

La largeur axiale $L_1$ de la première nappe de travail 31 est égale à 236 mm, lorsque le pneumatique est monté sur sa jante de service et gonflé à sa pression recommandée, ce qui est, pour un pneumatique de forme usuelle inférieure à la largeur de la bande de roulement, qui est égale, dans le cas étudié, à 242 mm. La largeur axiale $L_2$ de la deuxième nappe de travail 32 est inférieure à la largeur $L_1$, puisque égale à 216 mm. La largeur axiale $L_0$ d'une demi-nappe de triangulation 30 est égale à 70 mm et son extrémité axialement extérieure est à une distance axiale du plan équatorial égale à 100 mm.

Les deux nappes de travail 31 et 32 ont respectivement des calandrages $C_1$ et $C_2$ constitués du même mélange caoutchouteux. Il est bien entendu que les calandrages pourraient être différents.

La combinaison des couches de mélange caoutchouteux P et G assure un découplage entre la nappe de travail 31 et l'extrémité de la nappe de travail 32 radialement extérieure.

La zone d'engagement des profilés de mélange caoutchouteux P et G entre les deux nappes de travail 31 et 32 est définie par l'épaisseur ou plus précisément la distance radiale d entre l'extrémité de la nappe 32 et la nappe 31 et par la largeur axiale D du profilé de mélange caoutchouteux G comprise entre l'extrémité axialement intérieure dudit profilé de mélange caoutchouteux G et l'extrémité de la nappe de sommet de travail axialement la plus étroite 32. La distance radiale d est égale à 3.5 mm. La distance axiale D est égale à 21 mm, soit environ 14 fois le diamètre $\phi_2$ des éléments de renforcement de la nappe de travail 32, le diamètre $\phi_2$ étant égal à 1.5 mm.

Les modules d'élasticité à 10% d'élongation des couches de mélange caoutchouteux P et G et de la couche de calandrage $C_2$ de la nappe de travail 32, respectivement MP et MG et $MC_2$, sont choisis tels qu'ils satisfassent la relation suivante : MP < MG $\leq$ $MC_2$. Une telle réalisation du pneumatique 3 autorise une diminution des sollicitations de la couche de calandrage $C_2$, en passant par la couche de mélange caoutchouteux G au contact de la nappe de travail 32 jusqu'à la couche de mélange caoutchouteux P au contact de la nappe de travail 31, ce qui permet d'améliorer la résistance de l'architecture sommet à la séparation entre les extrémités des nappes de travail 31 et 32.

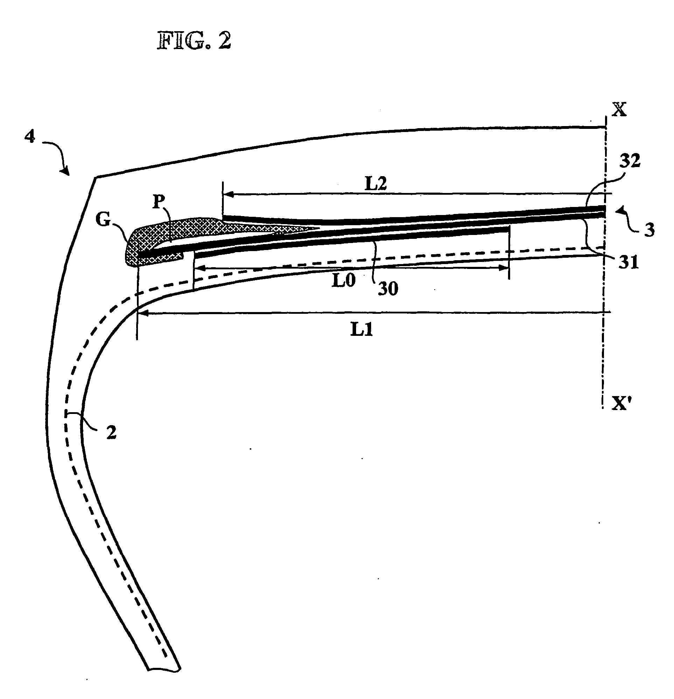

La figure 2 représente une vue schématique en section méridienne d'un pneumatique 4, semblable à celui de la figure 1 qui diffère de ce dernier par l'absence d'une couche de mélange caoutchouteux B et par la présence d'une couche de mélange caoutchouteux G qui enveloppe l'extrémité de la nappe de travail 31 et se prolonge radialement à l'intérieur de ladite nappe de sommet de travail.

Sur ce deuxième exemple de réalisation de l'invention, la couche de mélange caoutchouteux G, outre sa fonction de découplage entre les deux nappes de sommet de travail 31 et 32, remplie la fonction de la couche de mélange caoutchouteux B du premier exemple de réalisation de l'invention illustré sur la figure 1.

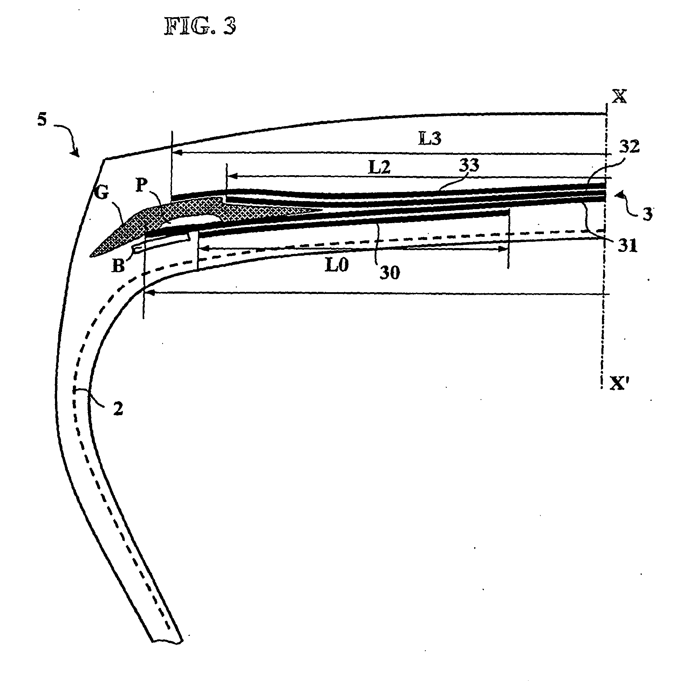

La figure 3 représente une vue schématique en section méridienne d'un pneumatique 5, semblable à celui de la figure 1 qui diffère de ce dernier par la présence d'une nappe complémentaire de protection 33. La nappe de protection 33 est mise en place radialement à l'extérieur de la nappe de travail 32. La nappe de protection 33 est une nappe de câbles métalliques en acier dits élastiques, c'est-à-dire présentant sous une force égale à 10 % de la charge de rupture un allongement relatif au moins égal à 2 %, (alors qu'un allongement inférieur à 2 % est la caractéristique d'un câble inextensible), orientés par rapport à la direction circonférentielle d'un angle $\alpha_3$ de même sens que l'angle $\alpha_2$, mais supérieur en valeur absolue audit angle $\alpha_2$ de 8° puisque égal à 26°. La largeur $L_3$ de la nappe de protection 33 est supérieure à la largeur $L_2$ de la nappe de travail 32 la moins large et radialement adjacente, et égale à 260 mm et donc inférieure à la largeur $L_1$.

Selon ce troisième exemple de réalisation de l'invention, la combinaison des gommes de mélange caoutchouteux P et G conduit à un découplage de la nappe de travail 31, axialement la plus large et de l'extrémité de la nappe de sommet de protection 33.

De manière similaire au cas de la figure 1, les modules d'élasticité à 10% d'élongation des couches de mélange caoutchouteux P et G et de la couche de calandrage $C_3$ de la nappe de protection 33, respectivement MP et MG et $MC_3$, sont choisis tels qu'ils satisfassent la relation suivante : MP < MG $\leq$ $MC_3$. Le calandrage $C_3$ de la nappe de sommet de protection 33 peut être soit identique soit différent de l'un et/ou l'autre des calandrages $C_1$, $C_2$ des nappes de sommet de travail 31 et 32.

Une telle réalisation du pneumatique 5 autorise une diminution des sollicitations de la couche de calandrage $C_3$, en passant par la couche de mélange caoutchouteux G au contact de la nappe de protection 33 jusqu'à la couche de mélange caoutchouteux P au contact de la nappe de travail 31, ce qui permet d'améliorer la résistance de l'architecture sommet à la séparation entre les extrémités de la nappe de travail 31 et de la nappe de protection 33.

Bien que la jonction entre les nappes 31 et 32 soit moins pénalisée du point de vue séparation internappes selon la représentation de la figure 3, la solution optimale consiste, conformément à l'invention, en ce que l'extrémité axialement intérieure de la couche de mélange caoutchouteux G est maintenue entre les nappes de sommet de travail 31 et 32 pour maintenir un découplage entre la nappe de sommet de travail 31 et l'extrémité de la nappe de sommet de travail 32. Les sollicitations qui peuvent apparaître à l'extrémité de la nappe de sommet de travail 32 dans le cas de la représentation de la figure 3 étant inférieures aux sollicitations des représentations précédentes ne comportant pas de nappe de sommet de protection, l'extrémité axialement intérieure du premier profilé de mélange caoutchouteux P est située à une distance du plan équatorial au moins égale à la demi-largeur de la nappe de travail 32 axialement la moins large. Une telle réalisation autorise notamment à ne pas augmenter l'épaisseur de l'armature de sommet de manière inacceptable dans la zone axiale du pneumatique comportant l'ensemble des nappes d'armature de sommet 30, 31, 32, et 33.

Des pneumatiques correspondant à la structure décrite conformément sur la figure 1 et des pneumatiques non illustrés, qui diffèrent des précédents par l'absence du troisième profilé de mélange caoutchouteux B, ont été comparés entre eux et à des pneumatiques de référence dont l'armature de sommet est composée des mêmes nappes de sommet, mais avec des bords de nappes de travail 31 et 32 séparés par un simple profilé de mélange caoutchouteux dont le module d'élasticité à 10 % est légèrement inférieur au module de même nom du calandrage identique pour les deux nappes.

Les roulages comparatifs des pneumatiques ont été effectués d'une part sur circuit autoroutier, c'est-à-dire un circuit où le pourcentage de lignes droites parcouru est très important, et d'autre part, sur un circuit dit à forte dérive, c'est-à-dire un circuit où le pourcentage de courbes est le plus important, les conditions de charge et de pression de gonflage étant les mêmes pour les deux roulages et celles recommandées par les manufacturiers de pneumatiques.

Les résultats obtenus montrent un avantage moyen de 20 % en kilomètres des pneumatiques réalisés selon l'invention et qui ne comporte pas le troisième profilé de mélange caoutchouteux B, par rapport aux pneumatiques de référence dans lesquels les bords des nappes de travail 31 et 32 sont séparés par un simple profilé de mélange caoutchouteux.

Par ailleurs, il apparaît que les pneumatiques réalisés selon l'illustration de la figure 1 présentent un avantage moyen de 10% en kilomètres par rapport aux pneumatiques réalisés selon l'invention et qui ne comporte pas le troisième profilé de mélange caoutchouteux B.

Ces résultats montrent d'une part que la combinaison des premier et second profilés de mélange caoutchouteux P et G, mis en place selon l'invention et présentant les caractéristiques énoncées précédemment, conduisent à une endurance améliorée par rapport aux pneumatiques connus.

En outre, la présence du troisième profilé de mélange caoutchouteux B bordant l'extrémité de la nappe d'éléments de renforcement de travail radialement la plus à l'intérieur permet de limiter encore la propagation de fissures au niveau des extrémités des nappes de l'armature de sommet.

## Revendications

1. Pneumatique (1, 4, 5) à armature de carcasse radiale (2), surmontée d'une armature de sommet (3) comprenant au moins deux nappes (31, 32) d'éléments de renforcement, parallèles entre eux dans chaque nappe, lesdites deux nappes (31, 32) ayant des largeurs axiales inégales, au moins un premier profilé P de mélange caoutchouteux séparant la nappe (31) d'éléments de renforcement axialement la plus large d'au moins une extrémité d'une deuxième nappe (32) axialement plus étroite que la nappe (31) axialement la plus large, ledit profilé P étant radialement séparé au moins en partie du calandrage C de ladite nappe (32) d'éléments de renforcement axialement plus étroite par un second profilé de mélange caoutchouteux G, et lesdits premier et second profilés de mélange caoutchouteux P et G et ledit calandrage C ayant respectivement des modules sécants d'élasticité sous tension à 10 % d'allongement MP, MG, MC de sorte que MC ≥ MG > MP, **caractérisé en ce que** l'extrémité axialement extérieure dudit premier profilé P est située à une distance du plan équatorial XX' du pneumatique inférieure à la distance séparant dudit plan XX' l'extrémité de la nappe (31) d'éléments de renforcement axialement la plus large.

2. Pneumatique (1, 4, 5) selon la revendication 1, **caractérisée en ce que** l'extrémité axialement extérieure du second profilé de mélange caoutchouteux g est située à une distance dudit plan XX' au moins égale à la demi-largeur de ladite nappe (32) d'éléments de renforcement axialement plus étroite.

3. Pneumatique (1, 4, 5) selon la revendication 1 ou 2, **caractérisée en ce que** le second profilé de mélange caoutchouteux G a son extrémité axialement intérieure située à une distance du plan équatorial XX' au plus égale à la distance séparant dudit plan XX' l'extrémité axialement intérieure dudit premier profilé de mélange caoutchouteux P.

4. Pneumatique (1, 4, 5) selon l'une des revendications 1 à 3, l'armature de sommet (3) étant composée d'au moins une armature de travail comprenant au moins deux nappes (31, 32) d'éléments de renforcement, parallèles entre eux dans chaque nappe et croisés d'une nappe à la suivante, lesdites deux nappes (31, 32) ayant des largeurs axiales inégales, et comportant en outre une nappe de sommet de protection (33), radialement extérieure à l'armature de sommet de travail, de largeur axiale comprise entre celles des nappes de travail (31, 32) et supérieure à la largeur de la nappe de travail (32) radialement adjacente à ladite nappe de sommet de protection, **caractérisée en ce que** l'extrémité axialement extérieure du premier profilé de mélange caoutchouteux P est située à une distance dudit plan au moins égale à la demi-largeur de la nappe sommet de protection (33).

5. Pneumatique (1, 4, 5) selon la revendication 4, **caractérisé en ce que** l'extrémité axialement intérieure du premier profilé de mélange caoutchouteux P est située à une distance du plan équatorial XX' au moins égale à la demi-largeur de la nappe de travail (32) axialement la moins large.

6. Pneumatique (1, 4, 5) selon l'une des revendications 1 à 5, l'armature de sommet (3) étant composée d'au moins une armature de travail comprenant au moins une nappe d'éléments de renforcement de travail, **caractérisé en ce qu'**un troisième profilé de mélange caoutchouteux B est adjacent à la nappe (31) d'éléments de renforcement de travail radialement la plus à l'intérieur, **en ce que** l'extrémité axialement extérieure dudit troisième profilé de mélange caoutchouteux B est située à une distance du plan XX' au moins égale à la demi-largeur de ladite nappe (31) d'éléments de renforcement de travail radialement la plus à l'intérieur et **en ce que** ledit troisième profilé de mélange caoutchouteux B est au moins en partie radialement intérieur à ladite nappe de travail (31) radialement la plus à l'intérieur.

7. Pneumatique (1, 4, 5) selon la revendication 6, **caractérisé en ce que** le troisième profilé de mélange caoutchouteux B enveloppe l'extrémité de la nappe de travail (31) radialement la plus à l'intérieure et **en ce que** ledit troisième profilé de mélange caoutchouteux B présente une partie radialement extérieure à la nappe de travail (31) radialement la plus à l'intérieure.

**8.** Pneumatique (1, 4, 5) selon l'une des revendications 1 à 7, l'armature de sommet étant composée d'au moins une armature de travail comprenant au moins une nappe d'éléments de renforcement, **caractérisé en ce que** le second profilé de mélange caoutchouteux G enveloppe l'extrémité de la nappe de travail radialement la plus à l'intérieur et **en ce que** ledit deuxième profilé de mélange caoutchouteux G présente une partie radialement intérieure à la nappe de travail (31) radialement la plus à l'intérieure.

**Claims**

**1.** A tyre (1, 4, 5) having a radial carcass reinforcement (2), surmounted by a crown reinforcement (3) comprising at least two plies (31, 32) of reinforcement elements which are parallel to each other within each ply, said two plies (31, 32) being of unequal axial widths, at least one first profiled element P of rubber mix separating the axially widest ply (31) of reinforcement elements from at least one end of a second ply (32), axially narrower than the axially widest ply (31), said profiled element P being radially separated at least in part from the liner C of said axially narrowest ply (32) of reinforcement elements by a second profiled element of rubber mix G, and said first and second profiled elements of rubber mix P and G and said liner C having secant moduli of elasticity under tension at 10% elongation MP, MG, MC respectively such that MC ≥ MG > MP, **characterised in that** the axially outer end of said first profiled element P is located at a distance from the equatorial plane XX' of the tyre less than the distance between said plane XX' and the end of the axially widest ply (31) of reinforcement elements.

**2.** A tyre (1, 4, 5) according to Claim 1, **characterised in that** the axially outer end of the second profiled element of rubber mix G is located at a distance from said plane XX' at least equal to half the width of said axially narrower ply (32) of reinforcement elements.

**3.** A tyre (1, 4, 5) according to Claim 1 or 2, **characterised in that** the second profiled element of rubber mix G has its axially inner end located at a distance from the equatorial plane XX' at most equal to the distance between said plane XX' and the axially inner end of said first profiled element of rubber mix P.

**4.** A tyre (1, 4, 5) according to one of Claims 1 to 3, the crown reinforcement (3) being formed of at least one working reinforcement comprising at least two plies (31, 32) of reinforcement elements, which are parallel to each other within each ply and crossed from one ply to the next, said two plies (31, 32) being of unequal axial widths, and furthermore comprising a protective crown ply (33), radially external to the working crown reinforcement, of an axial width between those of the working plies (31, 32) and greater than the width of the working ply (32) radially adjacent to said protective crown ply, **characterised in that** the axially outer end of the first profiled element of rubber mix P is located at a distance from said plane at least equal to half the width of the protective crown ply (33').

**5.** A tyre (1, 4, 5) according to Claim 4, **characterised in that** the axially inner end of the first profiled element of rubber mix P is located at a distance from the equatorial plane XX' at least equal to half the width of the axially least wide working ply (32).

**6.** A tyre (1, 4, 5) according to one of Claims 1 to 5, the crown reinforcement (3) being composed of at least one working reinforcement comprising at least one working ply of reinforcement elements, **characterised in that** a third profiled element of rubber mix B is adjacent to the radially innermost working ply (31) of reinforcement elements, **in that** the axially outer end of said third profiled element of rubber mix B is located at a distance from said plane XX' at least equal to half the width of said radially innermost working ply (31) of reinforcement elements, and **in that** said third profiled element of rubber mix B is at least in part radially internal to said radially innermost working ply (31).

**7.** A tyre (1, 4, 5) according to Claim 6, **characterised in that** the third profiled element of rubber mix B surrounds the end of their radially innermost working ply (31) and **in that** said third profiled element of rubber mix B has a part radially external to the radially innermost working ply (31).

**8.** A tyre (1, 4, 5) according to one of Claims 1 to 7, the crown reinforcement being composed of at least one working reinforcement comprising at least one ply of reinforcement elements, **characterised in that** the second profiled element of rubber mix G surrounds the end of the radially innermost working ply and **in that** said second profiled element of rubber mix G has a part radially internal to the radially innermost working ply (31).

**Patentansprüche**

**1.** Luftreifen (1, 4, 5) mit radialer Karkassenbewehrung (2), über der eine Scheitelbewehrung (3) liegt, die mindestens zwei Lagen (31, 32) von Verstärkungselementen aufweist, welche in jeder Lage parallel zueinander sind, wobei die zwei Lagen (31, 32) ungleiche axiale Breiten haben, wobei mindestens ein erstes Profilteil P aus Kautschukmischung die axial breiteste Lage (31) von Verstärkungselementen von mindestens einem Ende einer zweiten Lage (32) trennt, die axial schmaler ist als die axial breiteste Lage (31), wobei das Profilteil P radial zumindest zum Teil von der Kalandrierung C der axial schmaleren Lage (32) von Verstärkungselementen durch ein zweites Profilteil G aus Kautschukmischung getrennt wird, und wobei das erste und das zweite Profilteil P und G aus Kautschukmischung und die Kalandrierung C jeweils derartige Sekanten-Elastizitätsmodule MP, MG, MC unter Spannung bei 10 % Dehnung haben, dass gilt MC ≥ MG > MP, **dadurch gekennzeichnet, dass** das axial äußere Ende des ersten Profilteils P sich in einem Abstand von der Äquatorialebene XX' des Luftreifens befindet, der geringer ist als der Abstand, der das Ende der axial breitesten Lage (31) von Verstärkungselementen von der Ebene XX' trennt.

2. Luftreifen (1, 4, 5) nach Anspruch 1, **dadurch gekennzeichnet, dass** das axial äußere Ende des zweiten Profilteils G aus Kautschukmischung sich in einem Abstand von der Ebene XX' befindet, der mindestens gleich der halben Breite der axial schmalsten Lage (32) von Verstärkungselementen ist.

3. Luftreifen (1, 4, 5) nach Anspruch 1 oder 2, **dadurch gekennzeichnet, dass** das axial innere Ende des zweiten Profilteils G aus Kautschukmischung sich in einem Abstand von der Äquatorialebene XX' befindet, der höchstens gleich dem Abstand ist, der das axial innere Ende des ersten Profilteils P aus Kautschukmischung von der Ebene XX' trennt.

4. Luftreifen (1, 4, 5) nach einem der Ansprüche 1 bis 3, wobei die Scheitelbewehrung (3) aus mindestens einer Arbeitsbewehrung besteht, die mindestens zwei Lagen (31, 32) von Verstärkungselementen aufweist, die in jeder Lage parallel zueinander und von einer Lage zur nächsten gekreuzt sind, wobei die zwei Lagen (31, 32) ungleiche axiale Breiten haben, und die weiter eine Schutzscheitellage (33) aufweist, die radial außerhalb der Arbeitsscheitelbewehrung liegt, mit einer axialen Breite zwischen denjenigen der Arbeitslagen (31, 32) und größer als die Breite der Arbeitslage (32), die radial der Schutzscheitellage benachbart ist, **dadurch gekennzeichnet, dass** das axial äußere Ende des ersten Profilteils P aus Kautschukmischung sich in einem Abstand zu der Ebene befindet, der mindestens gleich der halben Breite der Schutzscheitellage (33) ist.

5. Luftreifen (1, 4, 5) nach Anspruch 4, **dadurch gekennzeichnet, dass** das axial innere Ende des ersten Profilteils P aus Kautschukmischung sich in einem Abstand zur Äquatorialebene XX' befindet, der mindestens gleich der halben Breite der axial schmalsten Arbeitslage (32) ist.

6. Luftreifen (1, 4, 5) nach einem der Ansprüche 1 bis 5, wobei die Scheitelbewehrung (3) aus mindestens einer Arbeitsbewehrung besteht, die mindestens eine Arbeitslage von Verstärkungselementen aufweist, **dadurch gekennzeichnet, dass** ein drittes Profilteil B aus Kautschukmischung der radial am weitesten innen liegenden Arbeitslage (31) von Verstärkungselementen benachbart ist, dass das axial äußere Ende des dritten Profilteils B aus Kautschukmischung sich in einem Abstand zur Ebene XX' mindestens gleich der halben Breite der radial am weitesten innen liegenden Arbeitslage (31) von Verstärkungselementen befindet, und dass das dritte Profilteil B aus Kautschukmischung sich zumindest teilweise radial innerhalb der radial am weitesten innen liegenden Arbeitslage (31) befindet.

7. Luftreifen (1, 4, 5) nach Anspruch 6, **dadurch gekennzeichnet, dass** das dritte Profilteil B aus Kautschukmischung das Ende der radial am weitesten innen befindlichen Arbeitslage (31) umhüllt, und dass das dritte Profilteil B aus Kautschukmischung einen Bereich aufweist, der radial außerhalb der radial am weitesten innen liegenden Arbeitslage (31) liegt.

8. Luftreifen (1, 4, 5) nach einem der Ansprüche 1 bis 7, wobei die Scheitelbewehrung aus mindestens einer Arbeitsbewehrung besteht, die mindestens eine Lage von Verstärkungselementen aufweist, **dadurch gekennzeichnet, dass** das zweite Profilteil G aus Kautschukmischung das Ende der radial am weitesten innen liegenden Arbeitslage umhüllt, und dass das zweite Profilteil G aus Kautschukmischung einen Bereich aufweist, der radial innerhalb der am weitesten innen liegenden Arbeitslage (31) liegt.

FIG. 1

FIG. 2

## FIG. 3

## RÉFÉRENCES CITÉES DANS LA DESCRIPTION

**Documents brevets cités dans la description**

- FR 1389428
- FR 2222232
- US 5154217 A
- FR 2298448
- FR 2499912

- FR 1226595
- JP 266703 A
- FR 2671516
- EP 1062106 A